Europäisches Patentamt

European Patent Office

Office européen des brevets

(11) Veröffentlichungsnummer: **0 084 135**
**B1**

(12) **EUROPÄISCHE PATENTSCHRIFT**

(45) Veröffentlichungstag der Patentschrift:
**07.12.88**

(51) Int. Cl.⁴: **B 29 C 43/20,** B 32 B 27/00

(21) Anmeldenummer: **82111712.4**

(22) Anmeldetag: **16.12.82**

(54) Verfahren zur Herstellung von Formkörpern aus faserverstärkten Schichtstoffen.

(30) Priorität: **16.01.82 DE 3201266**

(43) Veröffentlichungstag der Anmeldung:
**27.07.83 Patentblatt 83/30**

(45) Bekanntmachung des Hinweises auf die Patenterteilung:
**07.12.88 Patentblatt 88/49**

(84) Benannte Vertragsstaaten:
**AT CH DE FR GB IT LI SE**

(56) Entgegenhaltungen:
**DE-A- 2 344 620**
**DE-B- 2 737 107**
**FR-A- 1 390 556**
**US-A- 3 519 514**
**US-A- 3 707 433**
**US-A- 3 738 900**
**US-A- 3 819 401**

(73) Patentinhaber: **BASF Aktiengesellschaft,
Carl-Bosch-Strasse 38, D-6700 Ludwigshafen (DE)**

(72) Erfinder: **Kautz, Gerhard, Bergweg 2,
D-6719 Bissersheim (DE)**
Erfinder: **Grimm, Gerhard, Am Horren 4, D-6701 Altrip (DE)**
Erfinder: **Scholl, Karl Heinz, Dr., Muehltorstrasse 4,
D-6715 Lambsheim (DE)**
Erfinder: **Hagen, Karl, Dr., Duerkheimer Strasse 4,
D-6701 Friedelsheim (DE)**

**Beschreibung**

Die Erfindung bezieht sich auf ein Verfahren zur Herstellung von Formkörpern aus faserverstärkten Schichtstoffen, bei dem mindestens zwei Schichten aus gleich- oder verschiedenartigen thermoplastischen Kunststoffen über wenigstens eine Mittelschicht aus faserigen Substanzen verbunden werden, wobei die Schichten ausserhalb eines Formwerkzeuges auf Temperaturen bis zum Erweichungspunkt der Thermoplaste erwärmt und in dem Formwerkzeug verformt und miteinander verhaftet werden.

Aus der DE-A-14 54 988, die den Ausgangspunkt der Anmeldung darstellt, ist ein Verfahren zur Herstellung von Formteilen bekannt, bei dem ein Halbzeug aus faserverstärkten Thermoplasten bis zum plastischen Fliessen erhitzt und anschliessend verformt wird. Dadurch lassen sich auf einfache Weise stabile und stark beanspruchbare Formteile herstellen, die z.B. im Automobilbau oder Möbelbau Anwendung finden können. Das Halbzeug, das nach diesem Verfahren verarbeitet wird, besteht aus ebenen Bahnen, Tafeln oder Platten, die durch Beschichten von textilen Flächengebilden, z.B. Glasfasermatten, mit einer Kunststoffschmelze mittels eines Extruders hergestellt werden können. Bei diesem einfachen Verfahren ist jedoch eine einwandfreie Tränkung der Fasermatte mit Thermoplastschmelze auch dann nicht möglich, wenn die Fasermatte beidseitig beschichtet wird. Im fertigen Halbzeug bilden sich Hohlräume oder Lunker, wodurch die Festigkeit der Endprodukte stark herabgesetzt wird. Darüber hinaus belastet beispielsweise bei Formteilen mit grossformatigen Ausschnitten der hohe Abfallanteil mit schlecht recyclebaren Fasermatten beladenen Thermoplasten die Wirtschaftlichkeit des Verfahrens.

Weiterhin beschreibt die US-A-3 519 514 ein Verfahren zur Herstellung von Packmittel, deren Wände aus mindestens zwei Schichten aus Polyvinylchlorid und Polyvinylidenchlorid bestehen. Dabei werden jedoch nur Folien aus Kunststoffen, die derselben Kunststoff-Familie angehören, miteinander verklebt. Zusätzlich wird eine haftvermittelnde Zwischenschicht auf die Folienbahn aus PVC aufgetragen. Zwecks Vermeidung grösserer Abfälle erfolgt dies erst dann, wenn die Folienbahn entsprechend den Packmittelabmessungen zugeschnitten ist. Artfremde Kunststoffe lassen sich auf diese Weise, wenn überhaupt, nur sehr schlecht miteinander verbinden. Insbesondere die geringe Haftfestigkeit zwischen den einzelnen Schichten aus solchen Kunststoffen setzt einer nachfolgenden Verformung der Verbunde sowie der Verwendung dieser Formkörper Grenzen. Vielfach lässt sich bereits bei geringer Beanspruchung ein Ablösen der Schichten nicht vermeiden.

Es war daher Aufgabe der Erfindung, die vorstehend genannten Nachteile zu überwinden sowie eine Gesamtverbesserung des Eigenschaftsbildes sowie der Wirtschaftlichkeit von insbesondere langfaserverstärkten Formkörpern zu erreichen.

Zur Lösung dieser Aufgabe werden die Massnahme nach dem Kennzeichen des Anspruchs 1 vorgeschlagen.

Erfindungsgemäss werden Schichtstoffe aus Fasern und thermoplastischen Kunststoffen zu Formkörpern verarbeitet. Für das Verfahren sind alle thermoplastisch verarbeitbaren Kunststoffe geeignet, beispielsweise Olefinpolymerisate, wie Polyethylen oder Polypropylen; Styrolpolymerisate, wie Polystyrol oder Copolymere des Styrols; Chlor enthaltende Polymerisate, wie Polyvinylchlorid, Polyvinylidenchlorid oder chlorierte Polyolefine; Polyamide, Polymethylmethacrylat, Polycarbonat, sowie Mischungen dieser Polymerisate.

Diese Kunststoffe können die üblichen Zusatzstoffe, wie Füllstoffe, Pigmente, Farbstoffe, Antistatika, Stabilisatoren, Flammschutzmittel oder Gleitmittel enthalten.

Als faserige Flächengebilde sind Matten, Vliese, Filze oder Gewebe geeignet, die aus Glas-, Kohlenstoff- oder Kunststoff-Fasern oder Asbest hergestellt sein können. Bevorzugt sind langfaserige Substanzen mit Faserlängen von 10 mm oder mehr. Um einen besseren Zusammenhalt der Fasern im Flächengebilde zu bewirken, werden sie zweckmässigerweise mit üblichen Bindern auf Kunststoffbasis beschichtet. Glasfasern werden mit üblichen Schlichten behandelt, die z.B. einen Haftvermittler auf Silan- oder Chrombasis enthalten. Vorzugsweise werden lockere Glasfasermatten mit einem Flächengewicht von 250 bis 1200 g pro $m^2$ verwendet, die zusätzlich mit Oberflächenvliesen von 30 bis 60 g/$m^2$ Flächengewicht bedeckt sein können.

Das wesentliche Merkmal der Erfindung liegt darin, dass die Kunststoffschichten und die Faserschicht entsprechend den herzustellenden Formkörpern zugerichtet, beispielsweise vorgestanzt werden, so dass der Abfall in der Einzelkomponenten vollständig und problemlos wieder verwendbar ist. Die Auswahl der einzelnen Schichten kann je nach Anforderungsprofil des Endproduktes getroffen werden. Grundsätzlich kommen drei verschiedene Komponenten im Aufbau zur Wirkung, nämlich Verstärkungsvliese, Tränkfolien und höherviskose Folien, die zum Fliessen der Verstärkungen beitragen. Weiterhin können farbige Deckfolien oder Deckschichten aus Metallen in die Kombination miteinbezogen werden. Zur Erzielung spezieller Eigenschaftsprofile und zur Rohstoff-Kostenoptimierung können Folien unterschiedlicher Kunststoffarten bzw. Moleculargewichte eingesetzt werden. Als Verstärkungskomponente können auch mehrere gleichartige oder verschiedenartige Vliese verwendet werden.

Die einzelnen Schichten werden von Vorratsrollen entnommen und einzeln oder nacheinander aufbauend erwärmt. Dies geschieht beispielsweise, indem sie mit IR-Strahlern beheizt, durch einen Ofen geführt oder über heisse Walzen geleitet werden. Die Verarbeitungstemperatur liegt im allgemeinen zwischen 150 und 300 °C, vorzugsweise bei 200 bis 280 °C.

Die Temperatur der thermoplastischen Schichten richtet sich nach der Erweichungs- bzw. Zersetzungstemperatur des Thermoplasten. Sie liegt im allgemeinen zwischen 170 und 300 °C. Das Verfahren ist auch für die Verarbeitung höher viskoser Schmelzen geeignet, so dass beispielsweise bei Polyolefinen auch Viskositäten oberhalb von $5 \times 10^5$ cP und bei Polyamiden Viskositäten oberhalb von $1 \times 10^5$ cP noch einwandfrei verarbeitet werden können. Damit ist auch die Verarbeitung hochmolekularer Thermoplaste möglich.

Beim Zusammenführen von Thermoplastschichten und faserigen Flächengebilden dringt der Kunststoff nur wenig in die Faserschicht ein. Erst beim unmittelbar anschliessenden Verpressen und Verformen der Schichten wird die Faserschicht vollständig getränkt und die Luft daraus verdrängt. Dieses Verpressen findet in an sich bekannten Formwerkzeugen statt, wobei die Werkzeugtemperaturen unterhalb des Erstarrungspunktes des Thermoplasten liegen, so dass das Teil nach wenigen Sekunden erstarrt und aus dem Werkzeug entnommen werden kann. Für die weitere Verwendung der Formkörper ist von entscheidender Bedeutung ein Aufbau, der nach der Verformung nicht zu Schrumpfspannungen und Verzug im Fertigteil führt.

Zweckmässige Weiterbildungen des Verfahrens nach der Erfindung sind Gegenstand der Unteransprüche 2 bis 5.

Im folgenden wird die Erfindung unter Hinweis auf die Zeichnungen näher erläutert.

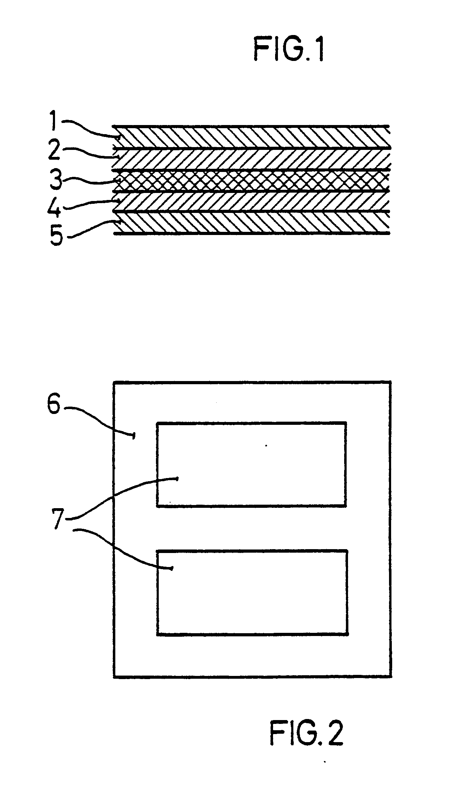

In den Figuren 1 und 2 ist beispielhaft der Schichtenaufbau für die Herstellung eines langfaserverstärkten Formkörpers dargestellt. Schicht 1 kann dabei eine thermoplastische Deckschicht spezieller Einfärbung sein. Mit 2 ist eine thermoplastische Schicht mit hoher Viskosität und mit 3 eine thermoplastische Schicht niedriger Viskosität bezeichnet, die die Aufgabe hat, die Schicht 4, die aus einer Glasfasermatte besteht, zu durchdringen und zu tränken. Schicht 5 besteht aus einer Metalldeckfolie. Der Schichtenaufbau ist bereits entsprechend der späteren Formteilkonstruktion vorgestanzt, so dass der Stanzabfall 7 schon beseitigt und als Einzelrohstoff wieder verwendbar ist. Der Rahmen 6 wird einem Formwerkzeug zugeführt und kann im wesentlichen abfallfrei verformt werden.

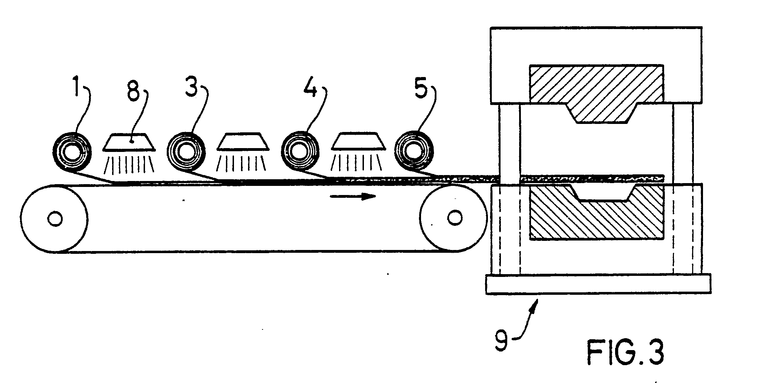

Figur 3 zeigt den Fertigungsablauf für die Herstellung eines solchen Formkörpers. Die vorgestanzten Schichten 1, 3, 4 und 5 werden jeweils von Vorratsrollen abgenommen, durch Strahler 8 erwärmt und dann nachfolgend aufeinander geschichtet. Dieses schichtförmige Gebilde kann gegebenenfalls noch durch Ultraschall-Schweissen zusammengeheftet oder durch Walzen zusammengedrückt werden. Anschliessend wird es mit Hilfe einer Querschneideeinrichtung auf Mass geschnitten und in einem Formwerkzeug 9 verformt.

## Patentansprüche

1. Verfahren zur Herstellung von Formkörpern aus faserverstärkten Schichtstoffen, bei dem mindestens zwei Schichten aus gleich- oder verschiedenartigen thermoplastischen Kunststoffen über wenigstens eine Mittelschicht aus faserigen Substanzen verbunden werden, wobei die Schichten ausserhalb eines Formwerkzeuges auf Temperaturen bis zum Erweichungspunkt der Thermoplaste erwärmt und in dem Formwerkzeug verformt und miteinander verhaftet werden, dadurch gekennzeichnet, dass die Schichten entsprechend der Kontur der Formkörper zugerichtet, einzeln erwärmt, zusammengeführt und in dem Formwerkzeug derart miteinander verpresst werden, dass die thermoplastischen Kunststoffe, die aus faserigen Substanzen bestehende Mittelschicht zumindest teilweise durchdringen.

2. Verfahren nach Anspruch 1, dadurch gekennzeichnet, dass die Mittelschicht aus Matten, Vliesen, Filzen oder Geweben besteht.

3. Verfahren nach den Ansprüchen 1 und 2, dadurch gekennzeichnet, dass die Schichten aus thermoplastischem Kunststoff glasfaser- und/oder glaskugel-gefüllt sind.

4. Verfahren nach den Ansprüchen 1 bis 3, dadurch gekennzeichnet, dass die Schichten in ihrer Lage zueinander ausserhalb des Formwerkzeuges durch Ultraschallschweissen fixiert werden.

5. Verfahren nach den Ansprüchen 1 bis 4, dadurch gekennzeichnet, dass auf den Aussenseiten der Formkörper Deckschichten aus Metallen mitangepresst werden.

## Claims

1. A process for the production of moldings from fiber-reinforced laminates, by bonding two or more layers of identical or different thermoplastics via one or more middle layers of fibrous substances, the layers being heated outside a mold to temperatures up to the softening point of the thermoplastics and being shaped, and caused to adhere to one another, in the mold, wherein the layers are prepared to correspond to the contour of the molding to be produced, are heated individually, are brought together and are pressed together, in the mold, in such a way that the thermoplastics penetrate, at least partially, through the middle layer consisting of fibrous substances.

2. A process as claimed in claim 1, wherein the middle layer consists of mats, fleeces, felts or fabrics.

3. A process as claimed in claim 1 or 2, wherein the layers of thermoplastic are glass fiber-filled and/or glass bead-filled.

4. A process as claimed in claim 1 or 2 or 3, wherein the layers are fixed in their relative position, outside the mold, by ultrasonic welding.

5. A process as claimed in claim 1 or 2 or 3 or 4, wherein covering layers of metals are also pressed on to the outer faces of the moldings.

## Revendications

1. Procédé de fabrication de corps moulés en stratifiés renforcés par des fibres, dans lequel au moins deux couches de matières thermoplastiques identiques ou différentes sont reliées par au moins une couche médiane en substances fibreuses, les couches étant chauffées, à l'extérieur d'un outil de formage, à des températures jusqu'au point de ramollissement des thermoplastes et mises en forme dans l'outil de formage puis rendus adhérentes l'une à l'autre caractérisé par le fait que les couches sont chauffées chacune, dressées selon le contour de l'outil de formage, réunies et pressées l'une avec l'autre dans l'outil de formage de manière que les matières thermoplastiques traversent au moins partiellement la couche médiane constituée du substances fibreuses.

2. Procédé selon la revendication 1, caractérisé par le fait que la couche médiane est constituée par des mats, voiles, feutres ou tissus.

3. Procédé selon les revendications 1 et 2, caractérisé par le fait que les couches en matière thermoplastique sont chargées de fibres de verre et/ou billes de verre.

4. Procédé selon les revendications 1 à 3, caractérisé par le fait que les couches sont fixées, en position, l'une à l'autre par soudage aux ultrasons à l'extérieur de l'outil de formage.

5. Procédé selon les revendications 1 à 4, caractérisé par le fait que sur les faces externes du corps moulé sont appliquées par pressage des couches de recouvrement en métal.

# FIG.1

# FIG.2

FIG.3